# FASCICULE DE BREVET EUROPEEN

(11) **EP 2 296 086 B1**
(45) Date de publication et mention de la délivrance du brevet: **02.11.2011**
(21) Numéro de dépôt: 10173752.6
(22) Date de dépôt: 23.08.2010
(51) Int. Cl.: G06F 7/72

(54) **Protection d'une génération de nombres premiers contre des attaques par canaux cachés**
Seitenkanalangriffsresistente Erzeugung von Primzahlen
Protection of prime number generation against side-channel attacks

(30) Priorité: 09.09.2009 FR 0956122
(43) Date de publication de la demande: 16.03.2011
(73) Titulaire: Proton World International N.V., 1930 Zawentem (BE)
(72) Inventeur: Cuypers, Frank, 9000, DE PINTE (BE)
(74) Mandataire: de Beaumont, Michel

(56) Documents cités:
- THOMAS FINKE ET AL: "A New Side-Channel Attack on RSA Prime Generation" 6 septembre 2009 (2009-09-06), CRYPTOGRAPHIC HARDWARE AND EMBEDDED SYSTEMS - CHES 2009, SPRINGER BERLIN HEIDELBERG, BERLIN, HEIDELBERG, PAGE(S) 141 - 155 , XP019128058 ISBN: 9783642041372 * le document en entier *
- CHRISTOPHE CLAVIER ET AL: "On the Implementation of a Fast Prime Generation Algorithm" 10 septembre 2007 (2007-09-10), CRYPTOGRAPHIC HARDWARE AND EMBEDDED SYSTEMS - CHES 2007; [LECTURE NOTES IN COMPUTER SCIENCE], SPRINGER BERLIN HEIDELBERG, BERLIN, HEIDELBERG, PAGE(S) 443 - 449 , XP019099271 ISBN: 9783540747345 * le document en entier *
- Markantonakis K; Mayes K; Tunstall M; Piper F; Sauveron D: "Smart Card Security" 4 mai 2007 (2007-05-04), pages 1-15, XP002576403 Extrait de l'Internet: URL:http://www.crisptelecom.com/files/scse crty.pdf [extrait le 2010-04-01]

## Description

### Domaine de l'invention

La présente invention concerne de façon générale les circuits électroniques et, plus particulièrement, les circuits générant des nombres premiers. L'invention concerne plus précisément la protection de la génération de nombres premiers dans un circuit électronique contre des attaques par canaux cachés (Side Channel Attacks), par exemple par analyse statistique de la consommation du circuit (SPA - Simple Power Analysis) ou de sa signature électromagnétique.

La présente invention s'applique plus particulièrement à des circuits exécutant des algorithmes de chiffrement asymétrique de type RSA et plus généralement des algorithmes exploitant une factorisation de nombres premiers.

### Exposé de l'art antérieur

L'algorithme RSA est l'un des algorithmes de chiffrement asymétrique (à clé publique) parmi les plus utilisés. Cet algorithme est utilisé pour chiffrer/déchiffrer des données ou pour signer des données et permettre leur authentification. Il se base sur l'utilisation d'une paire de clés comportant une clé publique et une clé privée. En chiffrement/déchiffrement, la clé publique est utilisée, par un émetteur, pour chiffrer des données à communiquer de façon confidentielle à un récepteur, ce dernier utilisant sa clé privée (ou secrète) pour déchiffrer les données. Pour une authentification, la clé privée est utilisée par l'émetteur pour signer les données alors que la clé publique est utilisée par le récepteur pour authentifier la signature.

La clé publique est une clé accessible de façon relativement large pour permettre à l'émetteur des données chiffrées ou au récepteur des données signées, d'exploiter ces données. Par contre, la clé privée est réservée au circuit ayant créé la paire de clés. Le cas échéant, le titulaire de la paire de clés communique directement la clé publique à l'autre partie pour lui permettre de traiter les données.

La génération de la paire de clés publique et privée fait appel à une utilisation de deux nombres "p" et "q", différents et premiers, de taille relativement importante (typiquement 1024 ou 2048 bits). Le produit de ces nombres premiers représente le module de chiffrement "n". Les nombres p et q sont choisis pour que les nombres p-1 et q-1 soient premiers avec une quantité "e", appelée exposant public, qui est premier avec l'indicatrice d'Euler "ϕ (n) du produit n (ϕ(n) = (p-1)(q-1)). Il en résulte qu'il existe un entier "d" tel que le produit e*d congrue à 1 modulo ϕ(n). La paire n et e représente la clé publique tandis que la paire n et d représente la clé privée. L'exposant privé d représente l'inverse de l'exposant e, modulo (p-1)(q-1). Les nombres premiers p et q sont présents uniquement dans le circuit contenant la clé privée.

La robustesse de l'algorithme RSA dépend des nombres premiers p et q. Pour "casser" l'algorithme RSA à partir de la clé publique, il faut être en mesure de factoriser le nombre n, donc d'obtenir les nombres premiers p et q. Une fois cette factorisation connue, on peut calculer l'exposant privé d à partir de l'exposant public e (d s'obtient en calculant l'inverse de e modulo (p-1)(q-1)). On considère aujourd'hui qu'en utilisant des modules n de taille suffisamment grande (typiquement de l'ordre de 1500 bits), les algorithmes actuels ne permettent pas, dans un temps raisonnable, de factoriser le nombre n.

Toutefois, l'introduction des nombres p et q dans le circuit électronique ou leur génération par ce circuit est particulièrement critique en terme de sécurité, car leur découverte à ce moment de la vie du circuit par un pirate lui fournit la factorisation du nombre n.

Une première technique de génération des clés RSA consiste à générer ces clés hors du circuit électronique. Les quantités p et q sont introduites dans le circuit électronique dans une phase de personnalisation. Cette technique est insensible à des attaques par canaux cachés dans la mesure où les clés ne sont pas générées par le circuit électronique lui-même.

Une deuxième technique consiste à faire générer les nombres premiers par le circuit électronique lui-même dans un environnement sécurisé (en pratique dans une installation protégée, à accès réservé). Cette technique ne pose pas non plus de problème d'attaques lors de la génération des nombres premiers.

Toutefois, de plus en plus souvent, on cherche à ce que les circuits électroniques puissent générer leurs clés RSA hors de ces environnements sécurisés. Cela permet, par exemple, de régénérer de nouvelles clés en cas de répudiation d'une clé précédente (clé supposée piratée). Une telle génération s'effectue, par exemple, lors d'une personnalisation du circuit électronique dans un environnement non sécurisé ou lors d'une première utilisation. Selon un exemple d'application aux passeports électroniques, on souhaite que la clé soit générée par la puce électronique contenue dans le passeport une fois que celui-ci est dans les mains de son titulaire. Ainsi, cette clé ne peut pas avoir servi au préalable dans une procédure d'authentification du passeport.

L'exposant public e peut être un paramètre du système à clé publique (Public Key Infrastructure - PKI) et est le même pour toutes les clés. Il est, par exemple, introduit dans le circuit électronique lors de sa fabrication (en mémoire morte ROM) ou dans une phase de personnalisation (en mémoire EEPROM).

L'exposant public e peut également être généré par le circuit électronique, par exemple par tirage d'un nombre aléatoire, et être ensuite fourni aux éléments avec lesquels le circuit doit communiquer.

La clé publique (exposant public et module de chiffrement) est donc soit connue du récepteur (signature) ou de l'émetteur (chiffrement), soit communiquée à celui-ci (à chaque transaction ou une fois pour toute) par le circuit électronique possédant la clé privée. La clé publique doit par ailleurs généralement être certifiée.

La génération de grands nombres premiers est coûteuse en temps et en calcul. En particulier, les tests dits de primalité qui permettent de valider le caractère premier ou non d'un nombre mettent généralement en oeuvre des exponentiations modulaires gourmandes en calcul (par exemple, le test de primalité dit de Miller-Rabin). C'est pourquoi, on cherche à n'effectuer ces tests que pour des nombres candidats ayant déjà passé avec succès des tests par rapport à des nombres premiers relativement petits. Ces tests correspondent à des divisions par des nombres premiers relativement petits ou à des comparaisons par rapport à des tables de nombres premiers. Par exemple, on peut effectuer un test de Miller-Rabin avec une petite base (deux par exemple) ou effectuer un calcul de plus grand commun diviseur (par exemple ajouter des octets modulo 255 pour obtenir un résultat inférieur à 255 et calculer ensuite le plus grand commun diviseur de ce résultat avec 255. S'il est différent de 1, on obtient avec un seul test que le nombre n'est pas divisible par les trois facteurs de 255, à savoir 3, 5 et 17).

Lorsque les nombres premiers sont générés par le circuit électronique dans un environnement non sécurisé, le circuit est susceptible de subir des attaques par canaux cachés (SPA ou analyse électromagnétique). En particulier, de telles attaques peuvent se produire lors des tests de primalité exécutant des divisions ou des comparaisons par rapport à des tables de nombres premiers. Résumé [inséren page 5a]

Il serait souhaitable de protéger la génération de nombres premiers et, par ce biais, la génération des clés d'un algorithme utilisant une factorisation de nombres premiers, lorsque ces nombres sont générés par le circuit électronique exploitant ces clés.

Un objet d'un mode de réalisation de la présente invention est de protéger les tests de primalité, notamment ceux exécutant des divisions ou des comparaisons par rapport à des tables, contre des attaques par canaux cachés.

Pour atteindre tout ou partie de ces objets ainsi que d'autres, il est prévu un procédé de protection d'une génération, par un circuit électronique, d'au moins un nombre premier en testant le caractère premier de nombres candidats successifs, comportant pour chaque nombre candidat des tests de primalité par rapport à des nombres premiers d'au moins un ensemble de nombres premiers consécutifs, dans lequel l'ordre d'application desdits tests est modifié au moins d'une génération à une autre d'un nombre premier.

Selon un mode de réalisation de la présente invention, ledit ordre est modifié à chaque nombre candidat.

Selon un mode de réalisation de la présente invention, ledit ordre est séquentiel.

Selon un mode de réalisation de la présente invention, ledit ordre est non séquentiel.

Selon un mode de réalisation de la présente invention, ledit ordre est sélectionné aléatoirement.

Selon un mode de réalisation de la présente invention, ledit ensemble comprend les nombres premiers compris entre un premier seuil et un deuxième seuil.

Le document "A New Side-Channel Attack on RSA Prime Generation", THOMAS FINKE ET AL, 6 septembre 2009 (2009-09-06), CRYPTOGRAPHIC HARDWARE AND EMBEDDED SYSTEMS - CHES 2009, SPRINGER BERLIN HEIDELBERG, BERLIN, HEIDELBERG, PAGE(S) 141 - 155 , XP019128058, ISBN: 978-3-642-04137-2 décrit cette vulnérabilité aux attaques par canaux cachés des tests de primalité des algorithmes de type RSA exploitant une factorisation de nombres premiers.

Le document "Smart Card Security"; Markantonakis K, Mayes K, Tunstall M, Piper F, Sauveron D; 4 mai 2007 (2007-05-04) , pages 1-15, extrait de l'Internet (URLhttp://www.crisptelecom.com/files/scsecrty.pdf), fait mention du principe d'exécution des opérations d'un algorithme cryptographique quelconque dans une séquence variable déterminée aléatoirement afin de protéger lesdites opérations contre des attaques par canaux cachés.

Selon un mode de réalisation de la présente invention, chaque test de primalité est un test de divisibilité du nombre candidat par un nombre premier dudit ensemble.

Selon un mode de réalisation de la présente invention, le test de primalité est basé sur une table crible comportant autant d'éléments qu'il existe de nombres premiers dans ledit ensemble, un nombre candidat initial étant obtenu en multipliant un nombre quelconque par un produit des nombres premiers inférieurs au premier seuil.

On prévoit également un procédé de génération, par un circuit électronique, d'au moins un nombre premier en testant le caractère premier de nombres candidats successifs.

On prévoit également un circuit électronique comportant des moyens adaptés à la mise en oeuvre de ces procédés.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est un schéma bloc d'un mode de réalisation d'un circuit intégré du type auquel s'applique à titre d'exemple la présente invention ;
la figure 2A illustre de façon très schématique un chiffrement au moyen d'un algorithme RSA ;
la figure 2B illustre de façon très schématique un déchiffrement au moyen d'un algorithme RSA ;
la figure 3 est un schéma bloc illustrant un système de transmission de données chiffrées ;
la figure 4 est un schéma bloc illustrant des étapes usuelles de génération de nombres premiers au sein d'un circuit électronique mettant en oeuvre un algorithme de type RSA ;
la figure 5 est un schéma bloc illustrant des étapes usuelles d'un test soumettant des nombres candidats à des divisions ;
la figure 6 est un schéma bloc illustrant des étapes d'un mode de réalisation du procédé de protection de génération d'un nombre premier reprenant le test de la figure 5 ; et
la figure 7 est un schéma bloc illustrant des étapes d'un autre mode de réalisation du procédé de génération d'un nombre premier adapté à l'exemple de la figure 4.

### Description détaillée

Par souci de clarté, de mêmes éléments ont été désignés par de mêmes références aux différentes figures. De plus, seules les étapes et éléments utiles à la compréhension de l'invention ont été représentés et seront décrits. En particulier, l'exploitation faite par le circuit électronique de l'algorithme utilisant les clés basées sur les nombres premiers n'a pas été détaillée, l'invention étant compatible avec toute exploitation usuelle (chiffrement, calcul de signature) des nombres premiers générés.

L'invention sera décrite par la suite en relation avec un exemple d'application à l'algorithme RSA utilisé en chiffrement/déchiffrement. On notera toutefois que l'invention s'applique quelle que soit l'utilisation faite de l'algorithme RSA à partir des nombres premiers générés, en particulier, l'invention s'applique à des signatures RSA. Plus généralement, l'invention s'applique à tout algorithme dont les clés dépendent d'une factorisation de nombre premiers, par exemple, le système de chiffrement dit de Rabin.

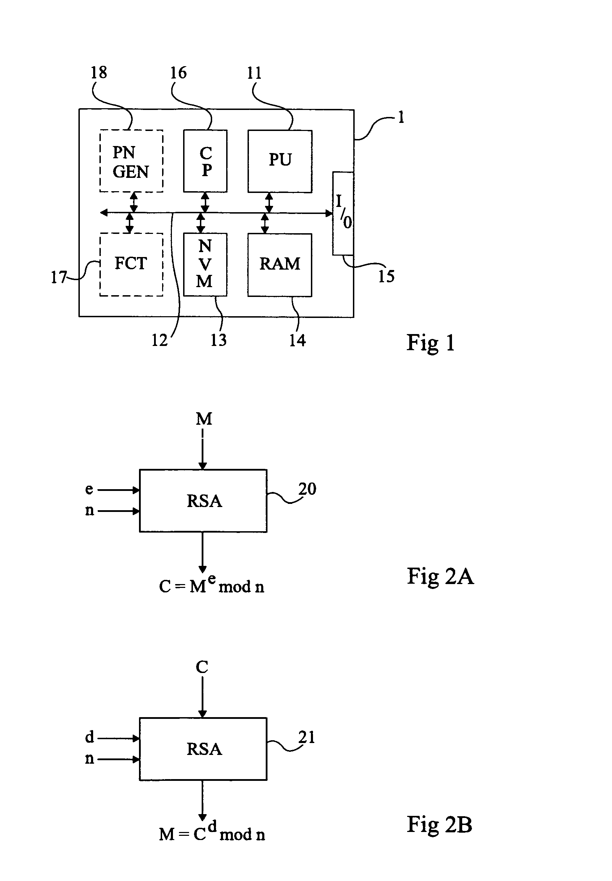

La figure 1 représente, de façon très schématique et sous forme de blocs, un exemple de circuit électronique 1 (par exemple d'une carte à puce) du type auquel s'applique la présente invention. Un tel circuit comporte une unité de traitement 11 (PU), susceptible de communiquer, par l'intermédiaire d'un ou plusieurs bus 12 de données, d'adresses et de commandes, avec différents éléments parmi lesquels une ou plusieurs mémoires non volatiles 13 (NVM), généralement une mémoire ROM contenant tout ou partie des programmes et une mémoire EEPROM destinée à contenir les clés RSA, une ou plusieurs mémoires volatiles 14 (typiquement de type RAM) et des circuits d'interface 15 (1/0) d'entrée-sortie permettant au circuit 1 de communiquer avec l'extérieur. Dans les applications que vise plus particulièrement la présente invention, le circuit 1 comporte également un processeur de chiffrement ou de calcul de signature 16 (CP-crytoprocesseur), le cas échéant confondu avec l'unité 11. Le circuit 1 est susceptible de mettre en oeuvre différentes fonctions réalisées par des éléments matériels et/ou logiciels qui ont été symbolisées en pointillés (blocs 17 et 18 - FCT et PN GEN). Une de ces fonctions (bloc 18) représente la fonction de génération de nombres premiers pour servir de clés d'un algorithme de type RSA. D'autres composants et circuits peuvent équiper le circuit électronique 1 en fonction de sa destination. En outre, des liaisons directes (non représentées) entre certains sous-ensembles du circuit pour échanger des données, adresses et/ou commandes peuvent être prévues.

Les figures 2A et 2B illustrent la mise en oeuvre d'un algorithme de type RSA. La cellule de calcul RSA est symbolisée par un bloc 20 en figure 2A (côté chiffrement) et par un bloc 21 en figure 2B (côté déchiffrement). Ces cellules de calcul peuvent en pratique être identiques, qu'elles soient logicielles ou matérielles.

Le chiffrement (figure 2A) d'un message M de données, représenté sous la forme d'un nombre entier, est introduit dans le bloc de calcul RSA qui contient ou reçoit par ailleurs le module de chiffrement n et l'exposant de chiffrement e de la clé publique. Le nombre entier M est inférieur au module de chiffrement n. Le bloc RSA calcule le message chiffré C qui représente l'exponentiation modulaire M^{e} mod n.

Côté déchiffrement (figure 2B) par le circuit possédant la clé privée (n, d), le message C est soumis à une exponentiation modulaire sur la base de l'exposant d et du modulo n, c'est-à-dire que la cellule 21 fournit le message M représentant C^{d} mod n.

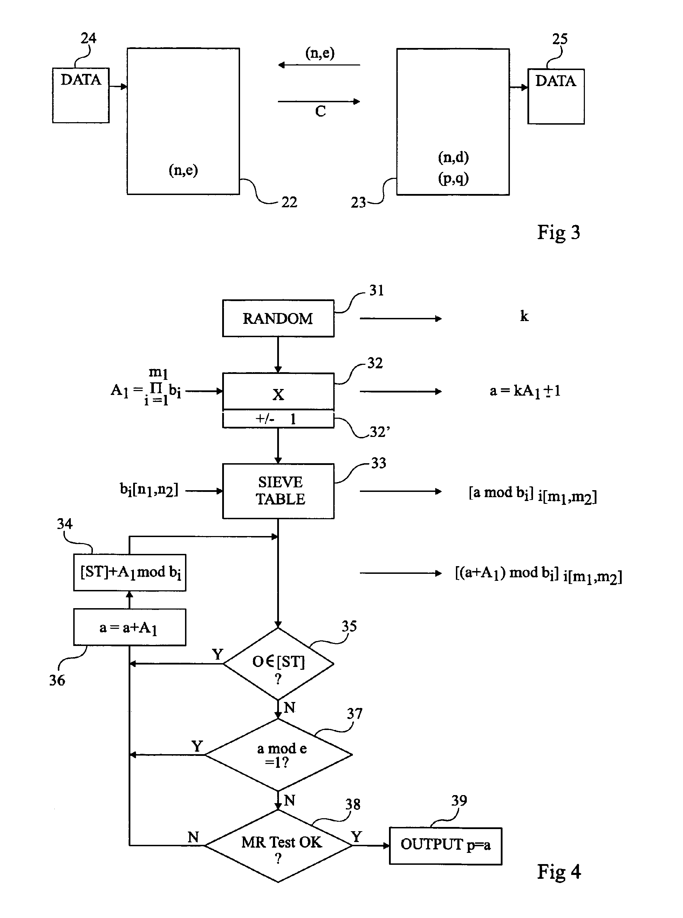

La figure 3 est un schéma bloc illustrant un exemple de transmission de données DATA (bloc 24) représentant un contenu numérique quelconque par un émetteur 22 à destination d'un récepteur 23. Le récepteur 23 dispose des clés RSA et commence, si elle n'est pas connue de l'émetteur, par lui transmettre la clé publique, c'est-à-dire le module de factorisation n et l'exposant public e. Cela permet à l'émetteur 22 de chiffrer les données et de les transmettre sous forme de message chiffré C. Le récepteur 23 utilise sa clé privé (n, d) pour déchiffrer les messages et obtenir les données DATA (bloc 25).

Les transmissions sont susceptibles de subir des tentatives de piratage visant à découvrir la factorisation du nombre n. L'invention ne vise pas ces attaques une fois les clés générées mais d'autres attaques susceptibles d'être introduites lors de la génération des nombres premiers qui intervient une seule fois (ou à chaque génération d'un nouvelle paire de clé).

La génération d'un nombre premier consiste à modifier un nombre candidat jusqu'à ce qu'il soit premier. Comme indiqué précédemment, on effectue des tests simplifiés pour vérifier que le candidat est bien premier avec des nombres relativement petits avant de le soumettre à un test de primalité adapté aux grands nombres. Les tests adaptés aux grands nombres sont généralement basés sur le théorème de Fermat d'après lequel si "u" est un nombre premier, vu-1 est congru à 1 modulo u pour tout entier "v", c'est-à-dire qu'il n'existe pas de factorisation possible du nombre u par un entier autre que 1 ou u. Le test de primalité désormais le plus utilisé pour la génération de nombres premiers est le test dit de Miller-Rabin. Ce test met en oeuvre des calculs d'exponentiation modulaire pour vérifier que le candidat n'est pas divisible par un autre nombre que 1 et est décrit, par exemple, dans l'ouvrage "Handbook of Applied Cryptography" de A. Menezes, P. van Oorshchot et S. Vanstone, paru en 1996 (CRC Press), chapitre 4, point 4.2.3, pages 138-140. En fait, les tests de primalité ne sont pas parfaits mais la probabilité d'erreur est suffisamment faible pour que l'on puisse considérer le candidat comme premier.

La figure 4 est un schéma bloc illustrant les étapes d'un procédé de génération usuel d'un nombre premier (noté arbitrairement p), destiné à représenter l'un des deux nombres premiers du module de factorisation RSA. Le procédé de la figure 4 est généralement mis en oeuvre deux fois successivement pour obtenir les nombres p et q.

On commence par sélectionner un nombre quelconque k (bloc 31, RANDOM), par exemple sous l'effet d'un tirage aléatoire. Puis, on modifie ce nombre de façon à obtenir un candidat non divisible par les nombres premiers inférieurs à un premier seuil n₁.

Selon un exemple, le nombre k est multiplié (bloc 32, X) par le produit A₁ des nombres premiers bi inférieurs au seuil n₁ (i étant compris entre 1 et m₁, où m₁ représente la quantité de nombres premiers de l'ensemble [1, n₁]). Le seuil n₁ est choisi relativement petit. Par exemple, si n₁ = 3, A₁ = 6 (m₁=3 et b₁=1, b₂=2, b₃=3). Si n₁ = 5, A₁ = 30 (m₁=4 et b₁=1, b₂=2, b₃=3, b₄=5). Puis, on ajoute ou on retranche l'unité (bloc 32', ± 1) au produit calculé pour qu'il ne soit divisible, dans l'exemple où n₁ = 3, ni par 2, ni par 3. On obtient un premier candidat a = k.A₁ ± 1, premier avec les nombres 2 et 3.

La taille souhaitée pour les nombres p et q est fixée. Par conséquent, la taille des candidats a doit correspondre à celle souhaitée pour les nombres p et q. La taille du nombre k dépend donc de la taille du nombre A₁. Dans l'exemple ci-dessus, pour un nombre a de 1024 bits et un nombre A₁ de 30, le nombre k est choisi sur 1019 bits.

Selon un autre exemple, le nombre k est modifié en effectuant l'opération k = k-(k mod A₁) pour le rendre divisible par A₁. Puis, on ajoute un nombre que l'on sélectionne arbitrairement dans une table de nombres premiers avec A₁. On obtient alors un candidat a, premier avec les nombres premiers inférieurs à n₁. Dans cet exemple, le nombre k a la même taille que celle souhaitée pour le nombre a.

Dans l'exemple de la figure 4, l'étape suivante (bloc 33) consiste à construire une table crible ST (SIEVE TABLE) dont chacun des termes représente le résultat de la division du candidat a par un des nombres premiers compris entre le premier seuil n₁ et un deuxième seuil n₂ supérieur. Cela revient à remplir la table avec des valeurs a mod bi pour bi compris entre n₁ et n₂ (donc pour i compris entre m₁ et m₂). Le seuil n₂ est choisi pour que la table ne soit pas trop importante en taille et pour que les calculs qui seront faits ultérieurement, pour chaque candidat, restent moins gourmands (en temps et énergie requise) qu'un test de Miller-Rabin sur le candidat. Par exemple, le seuil n₂ est égal à 128 ou 256. Pour simplifier les notations, on considère que le seuil n₁ est dans les deux ensembles [1, n1] et [n₁, n₂], mais en pratique il ne sera que dans un seul pour économiser une itération de test car le premier seuil n₁ correspond généralement à un nombre premier.

Une fois la table crible initialisée, les opérations suivantes sont effectuées tant que le candidat a ne correspond pas à un nombre premier acceptable pour la mise en oeuvre de l'algorithme RSA.

On commence par vérifier que le candidat est premier avec tous les nombres contenus dans l'intervalle [n₁, n₂]. Cela revient à vérifier (bloc 35, 0 ∈ [ST] ?) que cette table ne contient pas de valeur nulle. La présence d'une valeur nulle signifie que le candidat a est un multiple du nombre premier correspondant de la table.

Si le test 35 confirme (sortie N du bloc 35) que le candidat est premier avec tous les nombres de l'intervalle [n₁, n₂], on vérifie (bloc 37) si le candidat convient pour une mise en oeuvre de l'algorithme RSA. Pour cela, il faut vérifier que le nombre a-1 est premier avec e. En pratique, on regarde si la valeur a mod e (le reste de la division euclidienne de a par e) est égale à 1. Dans la négative (sortie N du bloc 37), le candidat est compatible avec l'algorithme RSA, c'est-à-dire qu'il respectera la condition que l'exposant e est un entier premier avec l'indicatrice d'Euler (p-1)(q-1).

Une fois le test 37 passé (sortie N), le candidat est finalement soumis à plusieurs exécutions (généralement de quelques exécutions à quelques dizaines d'exécutions) d'un test de primalité de Miller-Rabin (bloc 38, MR Test OK ?). S'il satisfait à ce test (sortie Y du bloc 38), le candidat a est fourni (bloc 39, OUTPUT p=a) en tant que nombre premier p.

Dès qu'un des tests 35, 37 ou 38 indique que le candidat ne convient pas (sorties Y des blocs 35 et 37 ou N du bloc 38), un nouveau candidat est choisi. Pour cela, on commence (bloc 36, a = a + A₁) par ajouter la valeur A₁ au candidat refusé. Puis, on met à jour la table crible [ST]. Cela revient à ajouter (bloc 34, [ST]+A₁ mod bi) la quantité A₁ modulo bi à chacun des éléments (identifiés par i) de la table et le procédé revient à l'étape 35. Bien que cela n'ait pas été représenté, on met également à jour une variable contenant la valeur a mod e qui servira ensuite au test 37.

Une fois un premier nombre premier p obtenu, le procédé est mis en oeuvre de nouveau pour générer le deuxième nombre premier q nécessaire à la mise en oeuvre de l'algorithme RSA. Une étape supplémentaire est alors de s'assurer que les nombres p et q sont premiers entre eux (étape non illustrée en figure 4). Comme il s'agit de nombres premiers, il suffit de vérifier qu'ils sont différents.

La succession des étapes de génération des nombres premiers est particulièrement sensible aux attaques par canaux cachés. En particulier, le nombre de tests 35 effectué pour un mauvais candidat renseigne sur le nombre avec lequel ce candidat n'est pas premier (cela correspond au nombre pour lequel la table crible courante contient un 0). Une attaque par canaux cachés peut déterminer le nombre de comparaisons effectuées dans la table avant qu'un candidat soit refusé (le temps et la consommation sont généralement les mêmes pour toutes les comparaisons), et ce pour tous les candidats (refusés) qui précèdent un candidat accepté. Lorsque qu'un candidat passe correctement tous les tests, on connait pour chacun des candidats précédents le nombre premier avec lequel ce candidat précédent n'est pas premier. En surveillant ainsi la génération des nombres p et q (et connaissant le module n), un pirate peut être en mesure de déterminer les nombre p et q.

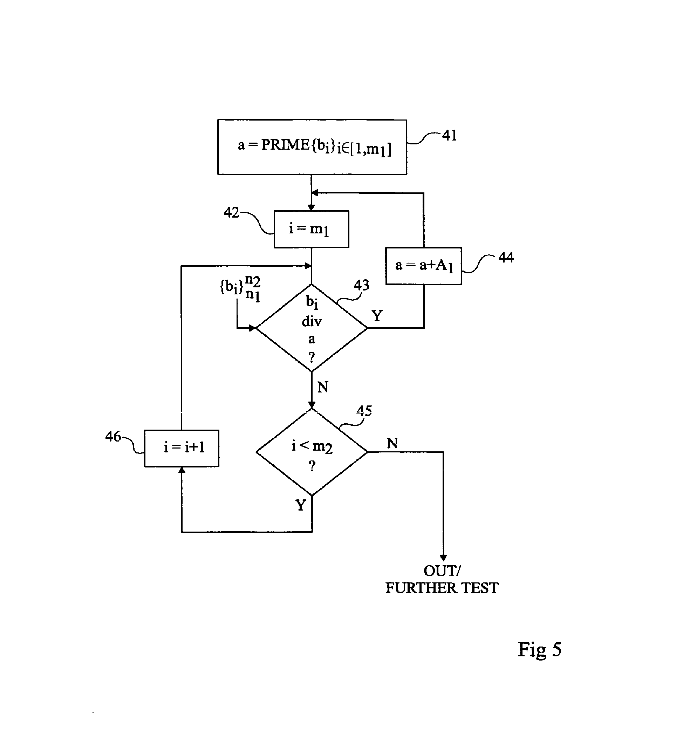

La figure 5 illustre des étapes d'un autre procédé de génération d'un nombre premier. Ces étapes correspondent à un test de primalité effectué sous la forme de tests de divisibilité d'un nombre candidat par des nombres premiers compris entre des seuils n1 et n2. Les étapes de la figure 5 peuvent remplacer les étapes 33, 34, 35 et 36 de la figure 4.

Au début du test de la figure 5, on dispose d'un candidat a qui est premier avec les m₁ nombres premiers (bloc 41, a = FRIME {bᵢ}_{i∈[1,m1]}) Le seuil m₁ peut être égal à 1 auquel cas les étapes préalables (bloc 32 et 32', figure 4) ne sont pas exécutées et le test de la figure 5 est appliqué au nombre k sélectionné aléatoirement.

Dans l'exemple de la figure 5, on teste la divisibilité du candidat a par rapport à tous les nombres premiers compris entre les seuils n₁ et n₂. Pour cela, on initialise l'indice i à la valeur m₁ (bloc 42) . Puis, on essaye de diviser le nombre a par bi (bloc 43, bi div a ?) . Si (sortie N du bloc 43) le candidat n'est pas divisible par le nombre premier courant (c'est-à-dire que le reste de la division n'est pas nul), les tests de divisibilité se poursuivent en boucle tant que tous les nombres premiers de l'intervalle [n₁, n₂] n'ont pas été testés (bloc 45, i < m₂ ?, et bloc 46, i=i+1). Dès qu'un candidat est divisible sans reste par le nombre premier correspondant (sortie Y du bloc 43), donc que le résultat de la division donne un entier, il n'est pas premier. Ce nombre candidat est alors incrémenté du produit A₁ (bloc 44, a = a + A₁) et le nouveau candidat est de nouveau soumis aux tests de primalité. Si m₁=1, l'incrémentation du bloc 44 (les incrémentations 34 et 36 en figure 4) revient à ajouter 2 pour passer d'un candidat au candidat suivant. Lorsqu'un nombre candidat a passé tous les tests (sortie N du bloc 45) de divisibilité par rapport à tous les nombres premiers de la fourchette, il est fourni en sortie du circuit ou à d'autres tests (OUT/ FURTHER TEST), par exemple aux tests de Miller-Rabin et de compatibilité RSA de la figure 4.

Dans l'exemple de la figure 5, une attaque par canaux cachés peut déterminer le nombre de divisions effectuées (nombre de tests 43) avant qu'un candidat ne soit refusé, et ce pour tous les candidats précédant un candidat accepté. A partir de ces informations, pour un candidat accepté, on sait pour tous les candidats précédents (a = a-A₁, a-2A₁, a-3A₁, etc.) par quel nombre premier bi il est divisible. On sait également que ce candidat n'est pas divisible par les nombres premiers inférieurs. Ces informations, collectées pour les nombres p et q et connaissant le produit p.q (n), peuvent permettre à un pirate de percer le secret de l'algorithme RSA.

Une attaque par canaux cachés de ce type a été présentée dans le cadre du Workshop on Cryptographic Hardware and Embedded Systems début septembre 2009 (Proceedings CHES 2009, A New Side-Channel Attack on RSA Prime Generation, Thomas Finke, Max Gebhardt, Werner Schindler).

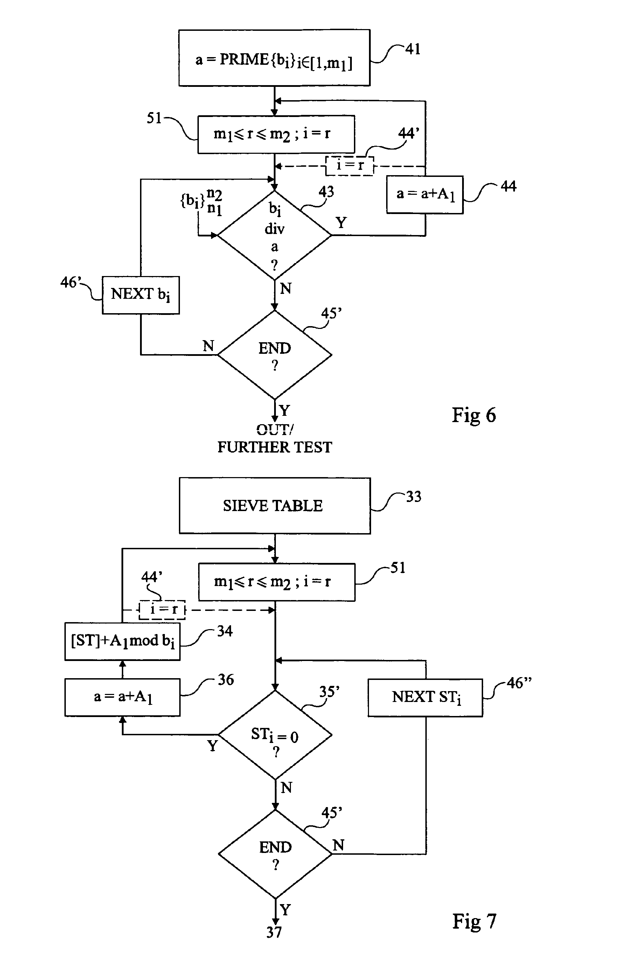

La figure 6 est un schéma bloc illustrant un mode de réalisation du procédé de protection de la génération d'un nombre premier contre une attaque par canaux cachés lors de tests de primalité par divisions successives. Cette figure est à rapprocher de la figure 5.

Comme précédemment, on part d'un candidat a (bloc 41) qui est premier avec des nombres premiers inférieurs à un seuil n₁.

On prévoit de masquer l'ordre dans lequel sont effectués les tests de primalité par rapport aux nombres premiers consécutifs de l'intervalle [n₁, n₂]. Pour cela, on modifie au moins d'une génération de nombre premier à une autre (entre la génération des nombres p et q), l'ordre dans lequel sont effectués les tests de primalité par rapport aux nombres de l'ensemble [n₁, n₂].

Par exemple, on tire un nombre aléatoire r compris entre les seuils m₁ et m₂ (bloc 51, m₁ ≤ r ≤ m₂). Ce nombre r sert de rang de départ (i=r) à un balayage des nombres premiers de l'ensemble [n₁, n₂].

Par conséquent, par rapport à l'exemple de la figure 5, on effectue en figure 6 le test (bloc 43, bi div a ?) de primalité du candidat a en commençant au rang r, par rapport au nombre premier bᵣ en regardant s'il est divisible par ce dernier. Dans la négative, on sélectionne (bloc 46', NEXT bi) le nombre premier suivant (i=r+1 jusqu'à m₂, puis en repartant de m₁) de l'ensemble et ainsi de suite tant que la liste n'est pas épuisée (bloc 45' END ?). Dès qu'un nombre premier divise le candidat, on sort de la boucle (sortie Y du bloc 43) et on passe à un candidat suivant (bloc 44, a = a + A₁).

On tire profit du fait que les attaques par canaux cachés exposées ci-dessus requièrent de connaître l'ordre dans lequel les nombre premiers sont testés.

L'ordre peut être changé plus ou moins souvent selon la robustesse souhaitée.

Dans l'exemple représenté en traits pleins en figure 6, l'ordre est changé à chaque nouveau candidat. La sortie du bloc 44 revient entre les blocs 41 et 51.

En variante, cet ordre est le même pour tout les candidats des tests de primalité par division. Dans ce cas, la sortie du bloc 44 revient en entrée du test 43 (pointillés en figure 6). Il faut toutefois s'assurer que le balayage des nombre premiers redémarre à i=r pour chaque nouveau candidat. Par exemple, l'index i est réinitialisé à la valeur r à chaque nouveau candidat (bloc 44').

Selon une autre variante, l'ordre n'est changé qu'entre la génération du nombre p et celle du nombre q. Cela signifie que le nombre r est conservé si des tests ultérieurs (par exemple 37 et 38, figure 4) rejettent un candidat. Il faut également ici que le balayage des nombre premiers redémarre à i=r pour chaque nouveau candidat. Le tirage du nombre r n'intervient que pour la génération d'un nouveau nombre premier.

Les nombres premiers de l'ensemble [n₁, n₂] sont généralement mémorisés, l'espace de stockage d'une table de petits nombres premiers (par exemple inférieurs à 256) étant raisonnable par rapport au temps que demanderait un calcul à la volée de ces nombres premiers à chaque test.

Tout autre méthode de sélection (séquentielle ou non) des nombres premiers pourra être envisagée, pourvu que l'ordre dans lequel s'effectuent les tests sur les nombres premiers de l'ensemble diffère au moins à chaque nouvelle génération. Par exemple, on peut modifier l'ordre des éléments dans la table de nombres premiers.

La figure 7 est un schéma bloc illustrant un autre mode de réalisation appliqué à l'utilisation d'une table crible (figure 4). Dans cet exemple, la sélection d'un nombre aléatoire (bloc 51) sert à déterminer l'ordre dans lequel seront effectués les tests pour vérifier si l'un des éléments de la table crible contient une valeur nulle.

Par exemple, le nombre aléatoire r sert à sélectionner la position (le rang) de départ du balayage des éléments STᵢ dans la table crible. Tant qu'aucun élément nul n'est trouvé (bloc 35', STᵢ = 0 ?), la table crible est parcourue (bloc 45' END ? et bloc 46", NEXT STi). Dès qu'un élément nul est trouvé, on effectue comme précédemment un passage à un candidat suivant en ajoutant le produit A₁ (bloc 36), puis en mettant à jour la table crible (bloc 34) en ajoutant à chacun de ses éléments le produit A₁ modulo le nombre premier concerné. Lorsqu'un candidat correct a été trouvé, (sortie Y du bloc 45'), il est soumis au test suivant (37, figure 4).

Comme dans le mode de réalisation de la figure 6, on peut sélectionner un nouveau nombre aléatoire à chaque candidat, à chaque génération de nombre premier, etc.

Divers modes de réalisation avec diverses variantes ont été décrits ci-dessus, on notera que l'homme de l'art pourra combiner divers éléments de ces divers modes de réalisation et variantes sans faire preuve d'activité inventive. De plus, la mise en oeuvre pratique de l'invention à partir des indications fonctionnelles données ci-dessus est à la portée de l'homme de métier, que ce soit pour une réalisation matérielle ou logicielle.

En particulier, le choix des seuils n₁ et n₂ utilisés dépend de l'application et du temps que l'on peut consacrer au test de Miller-Rabin lors de la génération des nombres premiers. Par exemple, bien qu'il soit préférable que la table crible ne soit pas basée sur des nombres premiers inférieurs au premier seuil pour économiser les calculs, ce n'est pas indispensable (m₁, donc n₁, peuvent être égal à 1).

De plus, bien que l'invention ait été décrite en relation avec un procédé mettant en oeuvre une seule table crible, on peut envisager d'utiliser plusieurs tables cribles en intercalant le test de primalité (étapes 34 et 35) de chaque table avant la table suivante, chaque table ayant pour rôle de vérifier la primalité du nombre candidat par rapport à des nombres premiers compris dans des plages contigües définies par des seuils successifs. Une telle variante peut servir, dans un souci d'optimisation, à ne mettre à jour une table que si le test de primalité basé sur la table précédente est validé. Dans ce cas, l'ordre de balayage des nombres premiers sera de préférence changé pour chacune des tables.

En outre, bien que l'invention ait été décrite plus particulièrement en relation avec la génération de nombres premiers pour créer des clés d'un algorithme RSA, elle s'applique plus généralement à toute génération de nombres premiers que l'on souhaite garder secrète.

## Revendications

1. Procédé de protection d'une génération, par un circuit électronique (1), d'au moins un nombre premier (p) destiné à un algorithme de chiffrement asymétrique de type RSA, en testant le caractère premier de nombres candidats (a) successifs, comportant pour chaque nombre candidat des tests de primalité (35', 43) par rapport à des nombres premiers d'au moins un ensemble de nombres premiers consécutifs ([n₁, n₂]), ledit procédé etant **caractérisé en ce que** l'ordre d'application desdits tests est modifié au moins d'une génération à une autre d'un nombre premier.

2. Procédé selon la revendication 1, dans lequel ledit ordre est modifié à chaque nombre candidat (a).

3. Procédé selon la revendication 1 ou 2, dans lequel ledit ordre est séquentiel.

4. Procédé selon la revendication 1 ou 2, dans lequel ledit ordre est non séquentiel.

5. Procédé selon l'une quelconque des revendications 1 à 4, dans lequel ledit ordre est sélectionné aléatoirement.

6. Procédé selon l'une quelconque des revendications 1 à 5, dans lequel ledit ensemble comprend les nombres premiers compris entre un premier seuil (n1) et un deuxième seuil (n2).

7. Procédé selon l'une quelconque des revendications 1 à 6, dans lequel chaque test de primalité est un test de divisibilité du nombre candidat (a) par un nombre premier dudit ensemble.

8. Procédé selon la revendication 5 ou 6, dans lequel le test de primalité est basé sur une table crible (ST) comportant autant d'éléments qu'il existe de nombres premiers dans ledit ensemble, un nombre candidat initial étant obtenu en multipliant un nombre quelconque (k) par un produit des nombres premiers inférieurs au premier seuil (n1).

9. Procédé de génération, par un circuit électronique, d'au moins un nombre premier en testant le caractère premier de nombres candidats (a) successifs, mettant en oeuvre un procédé de protection conforme à l'une quelconque des revendications 1 à 8.

10. Circuit électronique comportant des moyens adaptés à la mise en oeuvre du procédé conforme à l'une quelconque des revendications 1 à 9.

## Claims

1. A method for protecting the generation, by an electronic circuit (1), of at least one prime number (p) for an RSA-type asymmetrical encryption algorithm, by testing the primality of successive candidate numbers, comprising, for each candidate number, tests of primality (35', 43) with respect to prime numbers of at least one set of consecutive prime numbers ([n₁, n₂]), said method being **characterized in that** the order of application of said tests is modified at least from one prime number generation to another.

2. The method of claim 1, wherein said order is modified for each candidate number (a).

3. The method of claim 1 or 2, wherein said order is sequential.

4. The method of claim 1 or 2, wherein said order is non-sequential.

5. The method of any of claims 1 to 4, wherein said order is selected randomly.

6. The method of any of claims 1 to 5, wherein said set comprises the prime numbers ranging between a first threshold (n₁) and a second threshold (n₂).

7. The method of any of claims 1 to 6, wherein each primality test is a test of divisibility of the candidate number (a) by a prime number of said set.

8. The method of claim 5 or 6, wherein the primality test is based on a sieve table (ST) comprising as many elements as there are prime numbers in said set, an initial candidate number being obtained by multiplying an arbitrary number (k) by a product of the prime numbers smaller than the first threshold (n₁).

9. A method of generation, by an electronic circuit, of at least one prime number by testing the primality of successive candidate numbers (a), implementing the protection method of any of claims 1 to 8.

10. An electronic circuit comprising means capable of implementing the method of any of claims 1 to 9.

## Patentansprüche

1. Ein Verfahren zum Schutz der Erzeugung, mindestens einer Primzahl (p) für einen asymmetrischen Verschlüsselungsalgorithmus des RSA Typs, durch eine elektronische Schaltung (1) durch testen der Primzahleigenschaft von aufeinanderfolgenden Kandidatenzahlen, wobei folgendes vorgesehen ist,
für jede Kandidatenzahl Tests der Primzahleigenschaft (35', 43) bezüglich der Primzahlen von mindestens einem Satz von aufeinanderfolgenden Primzahlen ([n₁, n₂]), wobei das Verfahren **gekennzeichnet ist dadurch**, dass die Reihenfolge beziehungsweise Ordnung der Anwendung der Tests modifiziert wird von mindestens einer Primzahlerzeugung zu einer weiteren.

2. Verfahren nach Anspruch 1, wobei die Reihenfolge für jede Kandidatenzahl (a) modifiziert wird.

3. Verfahren nach Anspruch 1 oder 2, wobei die Reihenfolge sequentiell ist.

4. Verfahren nach Anspruch 1 oder 2, wobei die Reihenfolge nicht sequentiell ist.

5. Verfahren nach einem der Ansprüche 1 bis 4, wobei die Reihenfolge zufällig ausgewählt wird.

6. Verfahren nach einem der Ansprüche 1 bis 5, wobei der erwähnte Satz die Primzahlen im Bereich zwischen einer ersten Schwelle (n₁) und einer zweiten Schwelle (n₂) umfasst.

7. Verfahren nach einem der Ansprüche 1 bis 6, wobei jeder Primzahleigenschaftstest ein Test der Teilbarkeit der Kandidatenzahl (a) durch eine Primzahl des erwähnten Satzes ist.

8. Verfahren nach einem der Ansprüche 5 oder 6, wobei der Primzahleigenschaftstest auf einer Siebtabelle (ST) basiert, die so viele Elemente aufweist, wie Primzahlen in dem Satz vorhanden sind, wobei eine Anfangskandidatenzahl erhalten wird durch Multiplikation einer willkürlichen Zahl (k) mit einem Produkt der Primzahlen kleiner als die der ersten Schwelle (n₁).

9. Verfahren zur Erzeugung, durch eine elektronische Schaltung, von mindestens einer Primzahl durch Testen der Primzahleigenschaft von aufeinanderfolgenden Kandidatenzahlen (a), wobei das Schutzverfahren nach irgendeinem der Ansprüche 1 bis 8 implementiert wird.

10. Eine elektronische Schaltung, die Mittel aufweist die in der Lage sind das Verfahren von irgendeinem der Ansprüche 1 bis 9 zu implementieren.
